# EUROPEAN PATENT APPLICATION

(11) **EP 4 825 739 A1**
(43) Date of publication of application: **21.10.2026**
(21) Application number: 26170020.7
(22) Date of filing: 31.03.2026
(51) Int. Cl.: B64D 37/32, A62C 3/08, B64D 37/16, B64D 37/30, B64D 45/00

(54) **FLAME ARRESTER FOR AIRCRAFT REFUEL SYSTEM**

(30) Priority: 14.04.2025 GB 202505546
(71) Applicant: Airbus Operations Ltd, Filton, Bristol BS34 7PA (GB); Airbus Operations SLU, 28906 Getafe (ES)
(72) Inventor: ASLAM, Mohammad, Bristol (GB); FERNÁNDEZ AMENEIRO, Antonio, Getafe (ES)
(74) Representative: Lerwill-Williams, Jonathan Ashley Ronald

(57) **Abstract**

Disclosed is an aircraft refuelling system, the aircraft refuelling system comprising: a fuel tank; a refuel connector; and a conduit extending between the refuel connector and the fuel tank configured to carry a fluid; wherein the aircraft refuelling system further comprises a flame arrester removably mounted to the refuel connector.

## Description

### FIELD OF THE INVENTION

The present invention relates to an aircraft refuelling (or defuelling) system. More particularly, the present invention relates to an aircraft refuelling or defueling system comprising a flame arrester.

### BACKGROUND OF THE INVENTION

Hydrogen has been identified as a potentially environmentally preferable alternative to traditional fossil fuels, such as kerosene, in use as a fuel source for aircraft. Some aviation technologies and operations may require relatively minor adjustments to utilise hydrogen, whereas some will require significant alterations. The fuel supply and storage system is one of the latter, due to the considerably different requirements and characteristics of hydrogen in comparison to traditional jet fuels

Traditional kerosene refuelling technology is not suitable for hydrogen refuelling for a variety of reasons. At atmospheric pressure, hydrogen must be stored at temperatures of 20K or less to be stored as a liquid. A kerosene fuel line does not have sufficient insulation to carry liquid hydrogen at this temperature, and the materials used in such a kerosene fuel line are not typically able to withstand such low temperatures.

Additionally, hydrogen is a highly flammable substance, with an ignition energy (that being the energy required to cause a substance to ignite) significantly lower than kerosene. Hydrogen has a large range of concentrations in atmospheric air for which ignition can occur. Current safety measures in place for preventing accidental ignition of kerosene are likely to be inadequate for preventing ignition of hydrogen.

The refuel connection of a hydrogen-fuelled aircraft constitutes an area of particularly high ignition risk. This is because the refuel connection is at the boundary of the fuel system of the aircraft and the outside air, and as such is the point where there is potential for a flammable mixture of hydrogen and oxygen to occur. If ignition were to occur, then an added risk is posed to any personnel operating close to the refuel coupling as hydrogen burns with a flame that is invisible to the naked eye.

A valve, such as a poppet valve would typically be used at the refuel connection to prevent any gaseous hydrogen from escaping the refuel connection port on the aircraft. However, to ensure there is an acceptable level of safety, redundancy safety measures would be provided in case the valve were to fail. For example, one safety measure is to use a buffer of inert gas such as Nitrogen to separate any gaseous hydrogen from the oxygen in the ambient air outside the aircraft. This therefore prevents any flammable mixture being created.

However, using nitrogen as a buffer can negatively impact refuel time as additional steps are required during the refuel operation. For example, some additional steps associated with the use of nitrogen may be purging of the refuel pipework, chill-down of the refuel port, and inerting.

The present invention seeks to mitigate one or more of the above-mentioned problems. Alternatively or additionally, the present invention seeks to provide an improved refuelling system for refuelling and/or defuelling an aircraft.

### SUMMARY OF THE INVENTION

A first aspect of the invention provides an aircraft refuelling system, the aircraft refuelling system comprising: a fuel tank; a refuel connector; and a conduit extending between the refuel connector and the fuel tank configured to carry a fluid; wherein the aircraft refuelling system further comprises a flame arrester removably mounted to the refuel connector.

As such, the flame arrester provides a safety measure that can prevent flame ingress into the fuel system of the aircraft in the event of an accidental external ignition of fuel vapour.

The flame arrester may comprise a flame arrester housing configured to be removably mounted to the refuel connector; and a flame quenching element disposed within the flame arrester housing and configured to prevent flame propagation into the aircraft refuelling system.

The flame arrester housing may comprise one or more of a thread, a bayonet fitting, and a quick-release fitting that mountably engages with a corresponding fitting on the refuel connector. This allows for quick and easy removal and reconnection of the flame arrester to the refuel connector. This will help keep aircraft refuelling time, and therefore overall aircraft turn-around time, to a minimum.

The flame quenching element may comprise one or a combination of a wire mesh, a sintered metal matrix, or a stacked foil structure. As a result, the flame quenching element will provide a plurality of narrow channels through which gaseous hydrogen may pass, and the narrow channels have metal surfaces that will absorb heat from any potential advancing flame if ignition were to occur, reducing the gas temperature below its auto-ignition point.

The flame quenching element may comprise a plurality of narrow channels dimensioned to be smaller than the Maximum Experimental Safe Gap for hydrogen gas, and the plurality of narrow channels may be dimensioned to be between 0.2mm and 0.35mm.

The flame arrester may comprise handles to aid easy mounting and demounting of the flame arrester to the refuel connector. Handles can be particularly beneficial, for example, if a refuelling operator is required to wear protective gloves for instance if refuelling fuel at cryogenic temperatures.

The refuel connector comprises a poppet valve. A poppet valve will provide a first security measure to prevent any fuel or fuel vapour from escaping the refuel connector inadvertently.

One or more of the flame arrestor and the refuel connector may comprise a sensor configured to indicate to a user whether or not the flame arrestor is mounted correctly to the refuel connector.

The aircraft refuelling system may further comprise a removable protective cap for sealing the aircraft refuelling system when not in use.

During a refuelling and/or defuelling operation, the flame arrester may be configured to be removed prior to refuelling operations to permit unrestricted flow. This allows the aircraft refuelling system to accommodate higher flow rates with minimal pressure drop which could be caused if a flame arrester was in place during refuelling.

A second aspect of the invention provides an aircraft comprising the aircraft refuelling system according to the first aspect.

The aircraft may be a hydrogen-fuelled aircraft, and the aircraft refuelling system may be configured to receive liquid hydrogen fuel.

A third aspect of the invention provides a method of refuelling an aircraft, the aircraft comprising an aircraft refuelling system having a refuel connector, and a flame arrester removably mounted to the refuel connector; the method comprising the steps: removing the flame arrester from the refuel connector; attaching a fuel supply conduit to the refuel connector from ground service equipment; supplying fuel from the ground service equipment to the aircraft refuelling system; when a desired quantity of fuel has been supplied to the aircraft, disconnecting the fuel supply conduit from the refuel connector; and reconnecting the flame arrester to the refuel connector.

When the aircraft refuelling system further comprises a removable protective cap, the method may further comprise the additional steps of: removing the removable protective cap from the refuelling system prior to the step of removing the flame arrester from the refuel connector; and securing the removable protective cap to the refuelling system after the step of reconnecting the flame arrester to the refuel connector.

It will of course be appreciated that features described in relation to one aspect of the present invention may be incorporated into other aspects of the present invention. For example, the method of the invention may incorporate any of the features described with reference to the apparatus of the invention and vice versa.

### BRIEF DESCRIPTION OF THE DRAWINGS

Embodiments of the invention will now be described, by way of example only, with reference to the accompanying drawings, in which:
Figure 1 shows an aircraft equipped with an aircraft refuelling system according to an example;
Figure 2 shows a schematic view of an aircraft refuelling system comprising a flame arrester according to an example;
Figure 3 shows a schematic cross-sectional view of a flame arrester according to an example;
Figure 4 shows a schematic view of the aircraft refuelling system of Figure 2 and ground servicing refuelling equipment during a refuelling operation according to an example; and
Figure 5 is a flowchart illustrating steps of a method for refuelling an aircraft according to an example.

### DETAILED DESCRIPTION OF EMBODIMENT(S)

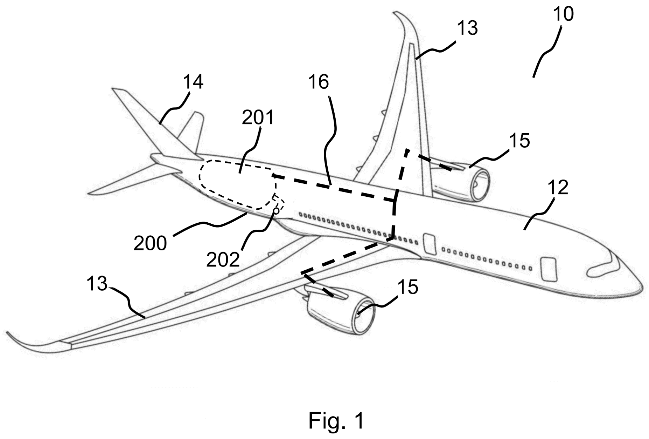

Figure 1 shows an aircraft 10 equipped with an aircraft refuelling system 200. The aircraft 10 comprises a fuselage 12 and a pair of wings 13. Each wing 13 supports an engine 15. The engines 15 are shown in the figure as gas turbine engines. However alternative forms of propulsion (or a combination of propulsion types) may be provided, including turbo-prop, hybrid or electric motor driven propeller engines. The aircraft 10 is a hydrogen-fuelled aircraft, and the refuel system 200 comprises a fuel tank 201 which is provided in the aft section of the fuselage 12 towards the tail 14. A refuel port 202 provides an interface through which the fuel tank 201 can be replenished. A fuel supply conduit 16 is schematically shown in Figure 1, through which fuel stored in the tank 201 can be provided to the engines 15. In alternative embodiments, the fuel supply conduit 16 may provide fuel to one or more alternative fuel consumers, or a combination thereof, for example a fuel cell.

The terms "refuel" or "refuelling" shall be referred to herein for simplicity and brevity, however, it should be understood that the processes and systems described herein can also be used for defuelling the aircraft, so should be considered to also refer to "defuel" and "defuelling".

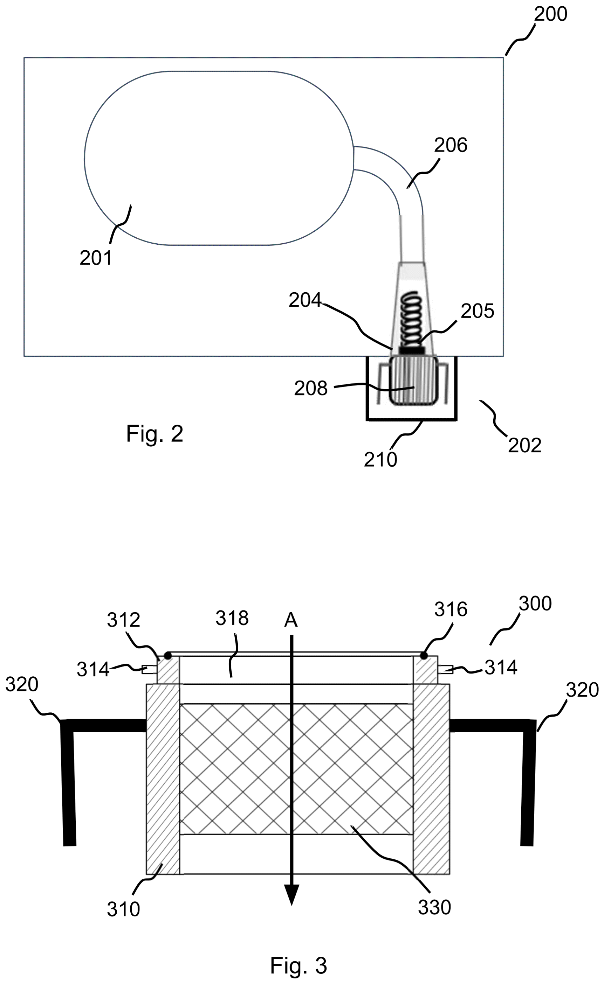

A simplified schematic view of the aircraft refuelling system 200 is shown in Figure 2. The aircraft refuelling system 200 comprises a fuel tank 201 which would be a pressurized tank capable of storing liquid hydrogen fuel at cryogenic temperatures. At the refuel port 202 the refuelling system 200 comprises a refuel connector 204. A conduit 206 extends between the refuel connector 204 and the fuel tank 201 to deliver fuel provided at the refuel connector 204 to the fuel tank 201 during a refuelling operation. It should be understood that many parts of the aircraft refuelling system 200 which are unrelated to the present invention have been omitted from the diagram for the sake of clarity and simplicity. For instance, the fuel supply conduits which carry fuel from the fuel tank to an onboard consumer (e.g. engine or fuel cell), are not shown for simplicity.

In the example shown in Figure 2, the refuel connector 204 comprises a poppet valve 205. The poppet valve 205 is a spring loaded valve and is closed when the refuel connector 204 is not connected to any ground service equipment couplings. The poppet valve 205 is the main safety measure that prevents leakage of hydrogen from the aircraft refuelling system 200 into the air outside the aircraft 10. However, the inherent properties of hydrogen present significant challenges to containment and handling. Due to its very small molecular size, hydrogen exhibits a high propensity for leakage through even minute imperfections in sealing interfaces. Furthermore, the demanding operational environment of a hydrogen-fuelled aircraft necessitates components capable of withstanding elevated pressures as well as the vibrational stresses associated with an aircraft platform. It is therefore important to consider safety redundancies and backup measures should the poppet valve 205 deteriorate over time or fail, such that hydrogen is able to leak from the aircraft refuelling system 200 into the air outside the aircraft 10. Should a leak occur, this can result in a flammable mixture of hydrogen and oxygen to occur in the vicinity of the refuel port 202.

The aircraft refuelling system 200 further comprises a flame arrester 208 which is removably mounted to the refuel connector 204. The flame arrester 208 prevents flame ingress into the aircraft refuelling system 200 in the event of an external ignition of hydrogen outside the aircraft in the vicinity of the refuel port 202. A more detailed description of one embodiment of such a flame arrester shall be provided below in relation to Figure 3.

Also shown in Figure 2 is a removable protective cap 210. The removable protective cap 210 seals the aircraft refuelling system 200 when not in use. As such, the removable protective cap 210 acts as an additional safety measure to prevent any potential leak of hydrogen from the refuelling system 200. The removable protective cap 210 can not only provide protection against potential leaks from the refuelling system 200, but can also provide mechanical protection against physical damage to the flame arrester 208, and the refuel connector 204, and also serves to prevent contamination of the refuelling system 200 from foreign object debris (FOD) or other environmental debris or insects.

Figure 3 shows a more detailed schematic cross-sectional view of a flame arrester 300, which would be suitable for use in the aircraft refueling system of Figure 2. The flame arrester 300 comprises a flame arrester housing 310, and a flame quenching element 330 disposed within the flame arrester housing 310.

At one end, the flame arrester housing 310 comprises a bayonet fitting 312 comprising a number of bayonet prongs 314. The bayonet fitting 312 is configured to engage with a corresponding fitting on the refuel connector 204 of a refuelling system 200, such that the flame arrester 300 can be releasably mounted to the refuel connector. In this example, the flame arrester housing 310 is provided with a bayonet fitting 312, but in other embodiments, alternative mounting solutions may be used, for example a screw thread, or a quick-release fitting. These types of mountings allow for quick and easy removal and reconnection of the flame arrester 300 to the refuel connector 204. A seal 316 is also provided which will seal against a sealing surface of the refuel connector, to ensure that any leak through the refuel connector 204 is directed through the flame arrester housing 310.

The flame arrester 300 is therefore configured to be removably secured to the refuel connector 204. The threaded, bayonet, or quick-release coupling allows removal of the flame arrester 300 from the prior to high-volume liquid hydrogen refuelling into the refuelling system 200. This allows the refuelling system 200 to accommodate higher flow rates with minimal pressure drop. During gas-phase transfer, or during idle storage, the flame arrester 300 should remain in place to provide passive protection.

The flame arrester 300 comprises handles 320 provided on the outside of the flame arrester housing 310. These handles 320 can aid the mounting and demounting of the flame arrester to the refuel connector. Such handles 320 can be particularly beneficial, for example, if a refuelling operator is required to wear protective gloves due to the cryogenic temperatures of the fuel. The handles 320 may also help to reduce the risk of an operator damaging the flame arrester 300 while handling it.

The flame arrester housing 310 defines a through-channel 318. The flame quenching element 330 is disposed within channel 318. The flame quenching element 330 is formed from a metallic matrix comprising layers of crimped ribbon or sintered metal. In alternative embodiments, the flame quenching element 330 may comprise a wire mesh, or a stacked foil structure. In each case, the flame quenching element 330 defines a plurality of narrow channels through which gaseous hydrogen may pass. However, these channels are dimensioned to be smaller than the Maximum Experimental Safe Gap (MESG) for hydrogen, which is typically between 0.25 to 0.3 mm, such that any flame front attempting to propagate through the element is extinguished by the cooling effect of the metal surfaces of the flame quenching element 330.

The narrow channels are therefore preferably dimensioned to be between 0.2mm and 0.35mm, and even more preferably between 0.25mm and 0.3mm.

The material used for the flame quenching element 330 is preferably corrosion-resistant stainless steel or nickel alloys capable of withstanding repeated thermal cycling, vibration, and mechanical impact. The flame quenching element 330 is supported within the flame arrester housing 310 in a manner that ensures mechanical stability and preserves the geometry of the narrow channels in the flame quenching element 330 even during rapid pressure increases.

Since the flame-arresting function relies on the geometric precision and integrity of the narrow channel matrix, care must be taken to protect the element from dents, corrosion, or thermal fatigue. Although not shown in the figures, the flame arrester may further include a protective shroud or support to prevent physical damage to the flame quenching element 330.

During a leak event, if the protective cap 210 is removed or is forcibly detached due to the increase in pressure, the flame arrester 300 allows gaseous hydrogen to flow outward through the channel 318 and through the flame quenching element 330, as indicated by arrow A in Figure 3. In the event of an ignition source outside the aircraft igniting a hydrogen/air mixture at or near the refuel port 202, the resulting flame front is arrested by the flame quenching element 330, preventing it from travelling into the refuel connector 204, through the conduit 206 and into the fuel tank 201. The metal surfaces of the narrow channels in the flame quenching element 330 absorb heat from the advancing flame, reducing the gas temperature below its auto-ignition point.

An advantage of having a flame arrester provided in the refuelling system is that it enables a refuelling operation to proceed without the need for nitrogen blanketing or other inert gas buffers, which would otherwise be required to mitigate the risk of flame propagation. By providing a passive, reliable flame barrier in the event of valve failure or external ignition, the invention allows faster, simpler, and more operationally efficient refuelling of hydrogen-fuelled aircraft.

It certain embodiments, but not shown in the figures, the refuel connector 204 and/or the flame arrestor 204, 300 will have sensors so that the crew onboard the aircraft or ground operations crew can be alerted if the flame arrestor has not been installed, or has not been installed correctly.

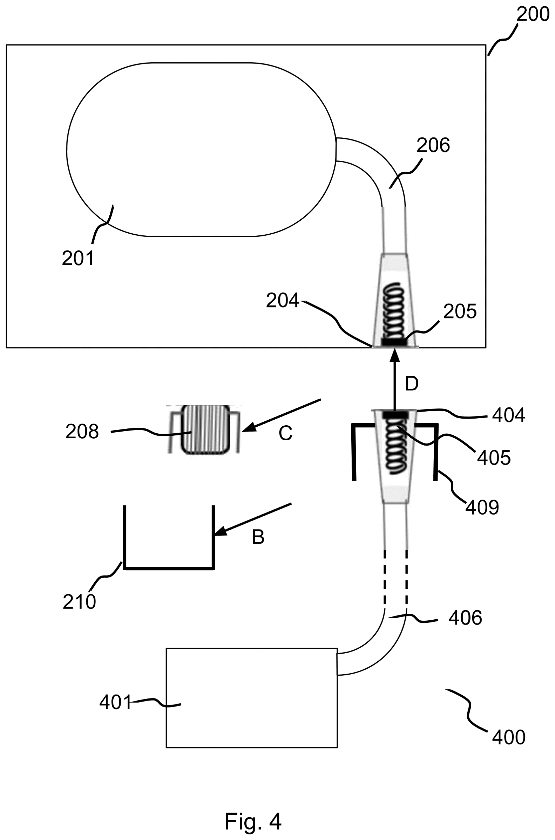

Figure 4 shows a schematic view of the aircraft refuelling system 200 of Figure 2 and ground servicing refuelling equipment 400 at a stage during a refuelling operation. The ground servicing refuelling equipment 400 comprises a fuel supply source 401, a refuel connector 404 and a fuel supply conduit 406. The fuel supply source 401 may be, for example, a mobile fuel truck or a static fuel tank at a refuelling station at an airport. The refuel connector 404 is similar to the refuel connector 204 on the aircraft, and also comprises a poppet valve 405. The two refuel connectors 204, 404 are configured to be attached together during a refuelling operation, and when they are attached both poppet valves 205, 405 will be opened to allow for fluid transfer to take place.

Figure 4 shows the apparatus at a stage prior to fuel transfer. It can be seen that the protective cap 210 has been removed, as indicated by arrow B, and the flame arrester 208 has also been removed from the refuel connector 204. The refuel connector 404 of the fuel supply conduit 406 is about to be attached to the refuel connector 205 of the aircraft refuelling system 200, as indicated by arrow D. The attachment of refuel connector 404 onto refuel connector 204 can be aided by the handles 409 on refuel connector 404. The handles 409 are similar to the handles 320 provided on the flame arrester 300 of Figure 3. As such, it can be said that handles 409 can aid the mounting and demounting of the refuel connector 404 to the refuel connector 204. Such handles 409 can be particularly beneficial, for example, if a refuelling operator is required to wear protective gloves due to the cryogenic temperatures of the fuel.

Once the fuel supply conduit 406 is attached to the refuel connector 204, fuel can be transferred from the fuel supply source 401 to the aircraft refuelling system 200, which will be stored in the tank 201. Once a desired quantity of fuel has been supplied, the fuel transfer is stopped, and the fuel supply conduit 406 and its refuel connector 404 is disconnected from the aircraft refuelling system's refuel connector 204. The flame arrester 208 and the protective cap 210 can then be reconnected to and secured to the refuelling system 200.

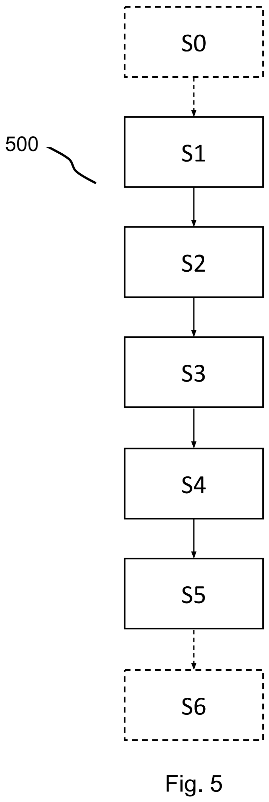

Figure 5 is a flowchart illustrating the steps of a method 500 for refuelling an aircraft, such as described above.

The first step, S1, comprises removing the flame arrester from the refuel connector. Removing the arrester allows a higher flow rate of fuel to be provided to the aircraft, and therefore will result in faster refuelling and aircraft turn-around times.

The second step, S2, comprises attaching a fuel supply conduit to the refuel connector from ground service equipment. The fuel supply conduit can be attached in a number of ways, but a particularly beneficial method will utilise the same mounting mechanism which the flame arrestor uses to mount to the refuel connector.

The third step, S3, is to supply fuel from the ground service equipment to the aircraft refuelling system.

Once the desired quantity of fuel has been supplied to the aircraft, in step S4 the fuel supply conduit is disconnected from the refuel connector.

Finally, in step S5, the flame arrester is remounted to the refuel connector to provide protection against flame propagation again to the aircraft refuelling system.

If the aircraft refuelling system is provided with a protective cap, as described in some of the embodiments above, then additional steps S0 and S6 are required, as shown by the dotted line boxes in Figure 5.

At the start of the method, at step 0, the removable protective cap is removed from the refuelling system prior to step S1 of removing the flame arrester from the refuel connector.

And then finally, in step S6, the removable protective cap is re-secured to the refuelling system after the step S5 of reconnecting the flame arrester to the refuel connector.

Whilst the present invention has been described and illustrated with reference to particular embodiments, it will be appreciated by those of ordinary skill in the art that the invention lends itself to many different variations not specifically illustrated herein. By way of example only, certain possible variations will now be described.

Variations in geometry, mounting configuration, material composition, and placement within the fuel system may be made without departing from the scope of the invention as defined in the appended claims.

Furthermore, the Figures show simplified schematic representations of certain embodiments, and whilst the figures only show the aircraft refuelling system comprising a single fuel conduit and refuel connector, it will be understood that there may be multiple fuel conduits and refuel connectors provided. For instance, a second conduit may be provided for a gas return line.

The above embodiments are to be understood as illustrative examples of the invention. Equivalents and modifications not described above may also be employed without departing from the scope of the invention, which is defined in the accompanying claims.

It is to be understood that any feature described in relation to any one embodiment may be used alone, or in combination with other features described, and may also be used in combination with one or more features of any other of the embodiments, or any combination of any other of the embodiments.

It will also be appreciated by the reader that integers or features of the invention that are described as preferable, advantageous, convenient or the like are optional and do not limit the scope of the independent claims. Moreover, it is to be understood that such optional integers or features, whilst of possible benefit in some embodiments of the invention, may not be desirable, and may therefore be absent, in other embodiments.

It should be noted that throughout this specification, "or" should be interpreted as "and/or".

Although the invention has been described above mainly in the context of a fixed-wing aircraft application, it may also be advantageously applied to various other applications, including but not limited to applications on vehicles such as helicopters, drones, trains, automobiles and spacecraft.

## Claims

1. An aircraft refuelling system, the aircraft refuelling system comprising:
a fuel tank;
a refuel connector; and
a conduit extending between the refuel connector and the fuel tank configured to carry a fluid;
wherein the aircraft refuelling system further comprises a flame arrester removably mounted to the refuel connector.

2. An aircraft refuelling system as claimed in claim 1, wherein the flame arrester comprises a flame arrester housing configured to be removably mounted to the refuel connector; and a flame quenching element disposed within the flame arrester housing and configured to prevent flame propagation into the aircraft refuelling system.

3. An aircraft refuelling system as claimed in claim 2, wherein the flame arrester housing comprises one or more of a thread, a bayonet fitting, and a quick-release fitting that mountably engages with a corresponding fitting on the refuel connector.

4. An aircraft refuelling system as claimed in claim 2 or claim 3, wherein the flame quenching element comprises one or a combination of a wire mesh, a sintered metal matrix, or a stacked foil structure.

5. An aircraft refuelling system as claimed in any one of claims 2 to 4, wherein the flame quenching element comprises a plurality of narrow channels dimensioned to be smaller than the Maximum Experimental Safe Gap for hydrogen gas.

6. An aircraft refuelling system as claimed in claim 5, wherein the plurality of narrow channels are dimensioned to be between 0.2mm and 0.35mm.

7. An aircraft refuelling system as claimed in any one of the preceding claims, wherein the flame arrester comprises handles to aid easy mounting and demounting of the flame arrester to the refuel connector.

8. An aircraft refuelling system as claimed in any one of the preceding claims, wherein the refuel connector comprises a poppet valve.

9. An aircraft refuelling system as claimed in any one of the preceding claims, wherein one or more of the flame arrestor and the refuel connector comprises a sensor configured to indicate to a user whether or not the flame arrestor is mounted correctly to the refuel connector.

10. An aircraft refuelling system as claimed in any one of the preceding claims, further comprising a removable protective cap for sealing the aircraft refuelling system when not in use.

11. An aircraft refuelling system as claimed in any one of the preceding claims, wherein during a refuelling and/or defuelling operation, the flame arrester is configured to be removed prior to refuelling operations to permit unrestricted flow.

12. An aircraft comprising the aircraft refuelling system according to any one of claims 1 to 11.

13. An aircraft as claimed in claim 12, wherein the aircraft is a hydrogen-fuelled aircraft, and the aircraft refuelling system is configured to receive liquid hydrogen fuel.

14. A method of refuelling an aircraft, the aircraft comprising an aircraft refuelling system having a refuel connector, and a flame arrester removably mounted to the refuel connector; the method comprising the steps:
removing the flame arrester from the refuel connector;
attaching a fuel supply conduit to the refuel connector from ground service equipment;
supplying fuel from the ground service equipment to the aircraft refuelling system;
when a desired quantity of fuel has been supplied to the aircraft, disconnecting the fuel supply conduit from the refuel connector; and
reconnecting the flame arrester to the refuel connector.

15. The method of claim 14, when the aircraft refuelling system further comprises a removable protective cap, the method further comprising the additional steps of:
removing the removable protective cap from the refuelling system prior to the step of removing the flame arrester from the refuel connector; and
securing the removable protective cap to the refuelling system after the step of reconnecting the flame arrester to the refuel connector.
